# EUROPÄISCHE PATENTSCHRIFT

(11) **EP 3 986 110 B1**
(45) Veröffentlichungstag und Bekanntmachung des Hinweises auf die Patenterteilung: **22.10.2025**
(21) Anmeldenummer: 20727242.8
(22) Anmeldetag: 19.05.2020
(51) Int. Cl.: A01C 17/00, G01S 13/58, G01S 13/87, G01S 13/88

(54) **VERFAHREN ZUM ERMITTELN VON GEEIGNETEN STREUEINSTELLUNGEN**
METHOD FOR DETERMINING SUITABLE SPREADING SETTINGS
PROCÉDÉ DE DÉTERMINATION D'AJUSTAGE APPROPRIÉ D'UN ÉPANDEUR

(30) Priorität: 19.06.2019 DE 102019116615
(43) Veröffentlichungstag der Anmeldung: 27.04.2022
(73) Patentinhaber: Amazonen-Werke H. Dreyer SE & Co. KG, 49205 Hasbergen (DE)
(72) Erfinder: STRÖBEL-FRÖSCHLE, Markus, 49124 Georgsmarienhütte (DE); RAHE, Florian, 49504 Lotte (DE)
(86) Internationale Anmeldenummer: PCT/EP2020/063898
(87) Internationale Veröffentlichungsnummer: WO 2020/254047

(56) Entgegenhaltungen:
- EP-A1- 3 152 995
- EP-A1- 3 453 241
- EP-A1- 3 656 199

## Beschreibung

### Beschreibung

Die Erfindung betrifft ein Verfahren zum Ermitteln von geeigneten Streueinstellungen nach dem Patentanspruch 1 und ein Verfahren zum Steuern und/oder Regeln von Streueinstellungen nach dem Patentanspruch 11.

Beim Ausbringen von Streugut auf eine landwirtschaftliche Nutzfläche sind an der landwirtschaftlichen Streumaschine geeignete Streueinstellungen vorzunehmen, um die beabsichtigte Streugutverteilung auf der landwirtschaftlichen Nutzfläche umsetzen zu können. Moderne landwirtschaftliche Streumaschinen verfügen bereits über Steuer- und/oder Regelungseinrichtungen, mittels welchen Streueinstellungen selbsttätig durch die Streumaschine während des Streuvorgangs angepasst werden.

Zum Ermitteln der geeigneten Streueinstellungen für die landwirtschaftliche Streumaschine zur Erzielung einer beabsichtigten Streugutverteilung auf einer landwirtschaftlichen Nutzfläche ist es beispielsweise bekannt, die aktuelle Wurfrichtung des abgeworfenen Streuguts während des Streuvorgangs sensorisch mittels einer Wurfrichtungserfassungseinrichtung zu messen. Zur sensorischen Wurfrichtungserfassung sind bisher mehrere Sensoren erforderlich, welche im Nahbereich der Streuscheibe zu positionieren sind und welche die Flugrichtungen des abgeworfenen Streuguts sensorisch detektieren. Die EP 3 152 995 A1 beschreibt eine Abwurfwinkelregelung, wobei ein Ist-Abwurfwinkel mit Hilfe von mehreren ringförmig um die Streuscheibe angeordneten Radarsensoren detektiert wird. Die direkte sensorische Erfassung der aktuellen Wurfrichtung ist bisher mit hohen Teile- und Implementierungskosten verbunden, wodurch es zu einer erheblichen Kostensteigerung der landwirtschaftlichen Streumaschine kommt.

Die der Erfindung zugrundeliegende Aufgabe besteht somit darin, das Ermitteln von geeigneten Streueinstellungen für eine landwirtschaftliche Streumaschine unter Berücksichtigung der aktuellen Wurfrichtung des abgeworfenen Streuguts zu vereinfachen.

Die Aufgabe wird gelöst durch ein Verfahren zum Ermitteln von geeigneten Streueinstellungen der eingangs genannten Art, wobei im Rahmen des erfindungsgemäßen Verfahrens die aktuelle Wurfweite des abgeworfenen Streuguts während des Streuvorgangs durch eine Wurfweitenmesseinrichtung der landwirtschaftlichen Streumaschine sensorisch erfasst wird. Das Ermitteln der aktuellen Wurfrichtung des abgeworfenen Streuguts erfolgt durch eine Datenverarbeitungseinrichtung auf Grundlage von streugutspezifischen und das Flugverhalten des Streuguts beeinflussenden Streuguteigenschaften des Streuguts und der erfassten aktuellen Wurfweite des abgeworfenen Streuguts. Die Erfindung macht sich die Erkenntnis zunutze, dass die aktuelle Wurfrichtung des abgeworfenen Streuguts nicht zwangsläufig direkt sensorisch zu erfassen ist, sondern auch ohne eine entsprechende Wurfrichtungsmesseinrichtung berechnet werden kann. Bei der Berechnung der aktuellen Wurfrichtung sind in diesem Zusammenhang jedoch streugutspezifische und das Flugverhalten des Streuguts beeinflussende Streuguteigenschaften sowie die aktuelle Wurfweite des abgeworfenen Streuguts zu berücksichtigen, um eine präzise Wurfrichtungsberechnung durchführen zu können. Die sensorische Erfassung der aktuellen Wurfweite des abgeworfenen Streuguts ist technisch wesentlich einfacher und somit auch kostengünstiger umzusetzen, als die direkte sensorische Erfassung der aktuellen Wurfrichtung des abgeworfenen Streuguts. An der landwirtschaftlichen Streumaschine ist somit keine kostenintensive Wurfrichtungserfassungseinrichtung zur direkten sensorischen Erfassung der aktuellen Wurfrichtung des abgeworfenen Streuguts vorzusehen, wodurch die Herstellungskosten einer entsprechenden intelligenten landwirtschaftlichen Streumaschine erheblich reduziert werden.

Im Rahmen des erfindungsgemäßen Verfahrens erfolgt das Ermitteln einer geeigneten Aufgabepunkteinstellung für die landwirtschaftliche Streumaschine unter Berücksichtigung der ermittelten aktuellen Wurfrichtung des abgeworfenen Streuguts und einer zur Erzielung der beabsichtigten Streugutverteilung geeigneten Wurfrichtung für das abgeworfene Streugut während des Streuvorgangs.

Über die Aufgabepunkteinstellung kann die Aufgabeposition des Streuguts auf zumindest eine Streuscheibe der landwirtschaftlichen Streumaschine eingestellt werden. Vorzugsweise umfasst das Verfahren auch das Bereitstellen der streugutspezifischen und das Flugverhalten des Streuguts beeinflussenden Streuguteigenschaften des Streuguts für die Datenverarbeitungseinrichtung und/oder das Bereitstellen der erfassten aktuellen Wurfweite des abgeworfenen Streuguts für die Datenverarbeitungseinrichtung.

Die Datenverarbeitungseinrichtung kann Bestandteil der landwirtschaftlichen Streumaschine oder eines entfernten Auswertecomputers sein. Wenn die Datenverarbeitungseinrichtung Bestandteil der landwirtschaftlichen Streumaschine ist, erfolgt das Bereitstellen der streugutspezifischen und das Flugverhalten des Streuguts beeinflussenden Streuguteigenschaften des Streuguts für die Datenverarbeitungseinrichtung und/oder das Bereitstellen der erfassten aktuellen Wurfweite des abgeworfenen Streuguts für die Datenverarbeitungseinrichtung vorzugsweise kabelgebunden. Wenn die Datenverarbeitungseinrichtung Bestandteil eines entfernten Auswertecomputers ist, erfolgt das Bereitstellen der streugutspezifischen und das Flugverhalten des Streuguts beeinflussenden Streuguteigenschaften des Streuguts für die Datenverarbeitungseinrichtung und/oder das Bereitstellen der erfassten aktuellen Wurfweite des abgeworfenen Streuguts für die Datenverarbeitungseinrichtung vorzugsweise kabellos, insbesondere über Funk und/oder unter Verwendung des Internets.

Die Wurfweitenmesseinrichtung kann nur einen oder alternativ mehrere Sensoren und/oder nur eine oder alternativ mehrere Kameras umfassen, welche einen durch den Streugutabwurf erzeugten Streufächer überwachen. Der eine oder die mehreren Sensoren der Wurfweitenmesseinrichtung können beispielsweise nach dem Doppler-Prinzip oder über zeitlich versetzte Abstands- und/oder Geschwindigkeitsmessungen die Wurfweite des abgeworfenen Streuguts ermitteln. Der eine oder die mehreren Sensoren der Wurfweitenmesseinrichtung können insbesondere Radarsensoren sein.

In einer bevorzugten Ausführungsform des erfindungsgemäßen Verfahrens wird die aktuelle Aufgabepunkteinstellung der landwirtschaftlichen Streumaschine während des Streuvorgangs ermittelt. Das Ermitteln der aktuellen Wurfrichtung des abgeworfenen Streuguts durch die Datenverarbeitungseinrichtung erfolgt vorzugsweise auch auf Grundlage der ermittelten aktuellen Aufgabepunkteinstellung der landwirtschaftlichen Streumaschine. Die aktuelle Aufgabepunkteinstellung der landwirtschaftlichen Streumaschine kann beispielsweise aus der Steuerung der landwirtschaftlichen Streumaschine ausgelesen werden. Vorzugsweise umfasst das Verfahren auch das Bereitstellen der ermittelten aktuellen Aufgabepunkteinstellung der landwirtschaftlichen Streumaschine für die Datenverarbeitungseinrichtung. Wenn die Datenverarbeitungseinrichtung Bestandteil der landwirtschaftlichen Streumaschine ist, erfolgt das Bereitstellen der ermittelten aktuellen Aufgabepunkteinstellung vorzugsweise kabelgebunden. Wenn die Datenverarbeitungseinrichtung Bestandteil eines entfernten Auswertecomputers ist, erfolgt das Bereitstellen der aktuellen Aufgabepunkteinstellung für die Datenverarbeitungseinrichtung vorzugsweise kabellos, insbesondere über Funk und/oder unter Verwendung des Internets.

In einer weiteren bevorzugten Ausführungsform des erfindungsgemäßen Verfahrens wird die aktuelle Scheibendrehzahl zumindest einer Streuscheibe der landwirtschaftlichen Streumaschine während des Streuvorgangs ermittelt. Vorzugsweise erfolgt das Ermitteln der aktuellen Wurfrichtung des abgeworfenen Streuguts durch die Datenverarbeitungseinrichtung auch auf Grundlage der ermittelten aktuellen Scheibendrehzahl der zumindest einen Streuscheibe der landwirtschaftlichen Streumaschine. Die aktuelle Scheibendrehzahl der zumindest einen Streuscheibe der landwirtschaftlichen Streumaschine kann beispielsweise aus der Steuerung der landwirtschaftlichen Streumaschine ausgelesen werden. Alternativ oder zusätzlich kann zur Drehzahlerfassung auch ein Drehzahlsensor zum Einsatz kommen. Vorzugsweise umfasst das Verfahren auch das Bereitstellen der ermittelten aktuellen Scheibendrehzahl für die Datenverarbeitungseinrichtung. Wenn die Datenverarbeitungseinrichtung Bestandteil der landwirtschaftlichen Streumaschine ist, erfolgt das Bereitstellen der erfassten aktuellen Scheibendrehzahl für die Datenverarbeitungseinrichtung vorzugsweise kabelgebunden. Wenn die Datenverarbeitungseinrichtung Bestandteil eines entfernten Auswertecomputers ist, erfolgt das Bereitstellen der ermittelten aktuellen Scheibendrehzahl für die Datenverarbeitungseinrichtung vorzugsweise kabellos, insbesondere über Funk und/oder unter Verwendung des Internets.

In einer anderen bevorzugten Ausführungsform des erfindungsgemäßen Verfahrens betreffen die streugutspezifischen und das Flugverhalten des Streuguts beeinflussenden Streuguteigenschaften die Schüttdichte und/oder Korngrößen- und/oder Kornformeigenschaften des Streuguts. Die Korngrößeneigenschaften des Streuguts können die mittlere Korngröße und/oder das Korngrößenspektrum des Streuguts betreffen. Auf Grundlage der streugutspezifischen und das Flugverhalten des Streuguts beeinflussenden Streuguteigenschaften kann die Datenverarbeitungseinrichtung die Verweildauer des Streuguts auf der Streuscheibe der Streumaschine ermitteln, insbesondere berechnen. Auf Grundlage der erfassten aktuellen Wurfweite des abgeworfenen Streuguts und der ermittelten Verweildauer des Streuguts auf der Streuscheibe kann die Datenverarbeitungseinrichtung die aktuelle Wurfrichtung des abgeworfenen Streuguts ermitteln, insbesondere berechnen.

In einer Weiterbildung des erfindungsgemäßen Verfahrens werden Streugutidentifikationsinformationen erfasst, mittels welcher das Streugut identifizierbar ist. Alternativ oder zusätzlich werden die streugutspezifischen und das Flugverhalten des Streuguts beeinflussenden Streuguteigenschaften des Streuguts von einer Streudatenbank, insbesondere auf Grundlage der erfassten Streugutidentifikationsinformationen, abgerufen. Das Erfassen der Streugutidentifikationsinformationen und/oder das Abrufen der streugutspezifischen und das Flugverhalten des Streuguts beeinflussenden Streuguteigenschaften des Streuguts von der Streudatenbank kann beispielsweise direkt durch die Streumaschine oder ein mobiles Endgerät erfolgen, welches die abgerufenen streugutspezifischen und das Flugverhalten des Streuguts beeinflussenden Streuguteigenschaften des Streuguts dann an die Streumaschine übermittelt. Für das Erfassen der Streugutidentifikationsinformationen kann beispielsweise eine Eingabe eines Benutzers an einem Eingabegerät, insbesondere der Streumaschine, oder einem mobilen Endgerät erforderlich sein. Das mobile Endgerät kann ein portables Mobilfunkgerät, insbesondere ein Smartphone, sein. Die Streugutidentifikationsinformationen können eine streugutspezifische Streugutbezeichnung oder eine streugutspezifische Streugutkennung umfassen. Das Bereitstellen der streugutspezifischen und das Flugverhalten des Streuguts beeinflussenden Streuguteigenschaften für die Datenverarbeitungseinrichtung kann das Übermitteln der abgerufenen streugutspezifischen und das Flugverhalten des Streuguts beeinflussenden Streuguteigenschaften an die Datenverarbeitungseinrichtung umfassen.

Das erfindungsgemäße Verfahren wird ferner dadurch vorteilhaft weitergebildet, dass zumindest eine Bildaufnahme des Streuguts erzeugt wird und/oder die streugutspezifischen und das Flugverhalten des Streuguts beeinflussenden Streuguteigenschaften des Streuguts durch Auswerten der erzeugten Bildaufnahme des Streuguts ermittelt werden. Beispielsweise können Kornformeigenschaften, das Korngrößenspektrum, die mittlere Korngröße und/oder die Schüttdichte des Streuguts durch die Auswertung der erzeugten Bildaufnahme ermittelt werden. Das Erzeugen der zumindest einen Bildaufnahme des Streuguts erfolgt vorzugsweise mittels eines mobilen Endgeräts. Das Auswerten der erzeugten Bildaufnahme zum Ermitteln der streugutspezifischen und das Flugverhalten des Streuguts beeinflussenden Streuguteigenschaften des Streuguts erfolgt vorzugsweise über das mobile Endgerät oder einen entfernten Auswertecomputer, an welchen das mobile Endgerät die erzeugte Bildaufnahme übermittelt. Das Bereitstellen der streugutspezifischen und das Flugverhalten des Streuguts beeinflussenden Streuguteigenschaften für die Datenverarbeitungseinrichtung kann das Übermitteln der ermittelten streugutspezifischen und das Flugverhalten beeinflussenden Streuguteigenschaften von dem mobilen Endgerät oder dem Auswertecomputer an die Datenverarbeitungseinrichtung umfassen.

In einer anderen bevorzugten Ausführungsform des erfindungsgemäßen Verfahrens wird einem Benutzer eine Eingabemöglichkeit für die streugutspezifischen und das Flugverhalten des Streuguts beeinflussenden Streuguteigenschaften des Streuguts bereitgestellt. Die Eingabemöglichkeit kann beispielsweise über eine Eingabeeinrichtung der Streumaschine oder ein mobiles Endgerät bereitgestellt werden. Das Bereitstellen der streugutspezifischen und das Flugverhalten des Streuguts beeinflussenden Streuguteigenschaften für die Datenverarbeitungseinrichtung kann das Übermitteln einer Benutzereingabe von der Eingabeeinrichtung der Streumaschine oder dem mobilen Endgerät an die Datenverarbeitungseinrichtung umfassen. Die mittlere Korngröße und/oder die Schüttdichte des Streuguts kann beispielsweise vor der Eingabe entsprechender Informationen mittels einer Gewichtserfassungseinrichtung, wie etwa einer Waage, und einer Volumenerfassungseinrichtung, wie beispielsweise einem Messbecher, ermittelt werden. Alternativ oder zusätzlich erfolgt das Auslesen eines grafischen Codes, welcher die streugutspezifischen und das Flugverhalten des Streuguts beeinflussenden Streuguteigenschaften beinhaltet. Das Auslesen des grafischen Codes kann durch einen Codescanner der Streumaschine oder ein mobiles Endgerät erfolgen. Das Bereitstellen der streugutspezifischen und das Flugverhalten des Streuguts beeinflussenden Streuguteigenschaften für die Datenverarbeitungseinrichtung kann das Übermitteln von aus einem grafischen Code ausgelesenen Streugutinformationen von dem Codescanner der Streumaschine oder dem mobilen Endgerät an die Datenverarbeitungseinrichtung umfassen. Alternativ oder zusätzlich erfolgt das Empfangen der streugutspezifischen und das Flugverhalten des Streuguts beeinflussenden Streuguteigenschaften von einer Sendeeinheit durch ein Lesegerät. Die Sendeeinheit kann ein Transponder, insbesondere ein RFID-Transponder, sein. Die Sendeeinheit kann auch ein Bluetooth-Low-Energy-Signalgeber, also ein sogenannter Bluetooth-LE-Beacon, sein. Das Bereitstellen der streugutspezifischen und das Flugverhalten des Streuguts beeinflussenden Streuguteigenschaften für die Datenverarbeitungseinrichtung kann das Übermitteln der von dem Lesegerät empfangenen streugutspezifischen und das Flugverhalten des Streuguts beeinflussenden Streuguteigenschaften von dem Lesegerät an die Datenverarbeitungseinrichtung umfassen.

In einer weiteren bevorzugten Ausführungsform des erfindungsgemäßen Verfahrens erfolgt das Ermitteln der aktuellen Wurfrichtung des abgeworfenen Streuguts ohne die Verwendung einer Wurfrichtungsmesseinrichtung. In einer alternativen Ausführungsform kann die von der Datenverarbeitungseinrichtung ermittelte aktuelle Wurfrichtung zum Plausibilisieren der Messdaten einer Wurfrichtungsmesseinrichtung der Streumaschine Verwendung finden. Alternativ können die Messdaten einer Wurfrichtungsmesseinrichtung zum Plausibilisieren der von der Datenverarbeitungseinrichtung ermittelten aktuellen Wurfrichtung Verwendung finden.

Außerdem ist ein erfindungsgemäßes Verfahren vorteilhaft, bei welchem der an der landwirtschaftlichen Streumaschine montierte Streuscheibentyp erfasst wird. Das Ermitteln der aktuellen Wurfweite des abgeworfenen Streuguts und/oder das Ermitteln der geeigneten Aufgabepunkteinstellung für die landwirtschaftliche Streumaschine erfolgt vorzugsweise auch unter Berücksichtigung des an der landwirtschaftlichen Streumaschine montierten Streuscheibentyps. Streuscheibentypen können sich beispielsweise hinsichtlich ihrer Geometrie und/oder Ausstattung voneinander unterscheiden. Beispielsweise unterscheiden sich Streuscheiben unterschiedlicher Streuscheibentypen auch hinsichtlich ihres Durchmessers und/oder der Anzahl und/oder Ausbildung ihrer Wurfschaufeln. Die verwendete Streuscheibe hat einen erheblichen Einfluss auf das Flugverhalten des abgeworfenen Streuguts. Unter Berücksichtigung des montierten Streuscheibentyps kann die aktuelle Wurfrichtung des abgeworfenen Streuguts somit besonders präzise berechnet werden. Das Verfahren umfasst vorzugsweise außerdem das Bereitstellen der Informationen zu dem an der landwirtschaftlichen Streumaschine montieren Streuscheibentyp für die Datenverarbeitungseinrichtung. Wenn die Datenverarbeitungseinrichtung Bestandteil der landwirtschaftlichen Streumaschine ist, erfolgt das Bereitstellen der Informationen zu dem an der landwirtschaftlichen Streumaschine montierten Streuscheibentyp für die Datenverarbeitungseinrichtung vorzugsweise kabelgebunden. Wenn die Datenverarbeitungseinrichtung Bestandteil eines entfernten Auswertecomputers ist, erfolgt das Bereitstellen der Informationen zu dem an der landwirtschaftlichen Streumaschine montierten Streuscheibentyp für die Datenverarbeitungseinrichtung vorzugsweise kabellos, insbesondere über Funk und/oder unter Verwendung des Internets.

In einer weiteren bevorzugten Ausführungsform des erfindungsgemäßen Verfahrens umfasst das Erfassen des an der landwirtschaftlichen Streumaschine montierten Streuscheibentyp das Bereitstellen einer Eingabemöglichkeit für die Bereitstellung von Informationen zu dem an der landwirtschaftlichen Streumaschine montierten Streuscheibentyp. Die Eingabemöglichkeit kann beispielsweise über eine Eingabeeinrichtung der Streumaschine oder ein mobiles Endgerät bereitgestellt werden. Das Bereitstellen von Informationen zu dem an der landwirtschaftlichen Streumaschine montierten Streuscheibentyp kann das Übermitteln einer Benutzereingabe von der Eingabeeinrichtung der Streumaschine oder dem mobilen Endgerät an die Datenverarbeitungseinrichtung umfassen. Alternativ oder zusätzlich umfasst das Erfassen des an der landwirtschaftlichen Streumaschine montierten Streuscheibentyps das Auslesen eines grafischen Codes, welcher Informationen zu dem an der landwirtschaftlichen Streumaschine montierten Streuscheibentyp beinhaltet. Das Auslesen des grafischen Codes kann durch einen Codescanner der Streumaschine oder ein mobiles Endgerät erfolgen. Das Bereitstellen von Informationen zu dem an der landwirtschaftlichen Streumaschine montierten Streuscheibentyp kann das Übermitteln von aus einem grafischen Code ausgelesenen Informationen zu dem an der landwirtschaftlichen Streumaschine montierten Streuscheibentyp von dem Codescanner der Streumaschine oder dem mobilen Endgerät an die Datenverarbeitungseinrichtung umfassen. Alternativ oder zusätzlich umfasst das Erfassen des an der landwirtschaftlichen Streumaschine montierten Streuscheibentyps das Empfangen von Informationen zu dem an der landwirtschaftlichen Streumaschine montierten Streuscheibentyp von einer Sendeeinheit durch ein Lesegerät. Die Sendeeinheit kann ein Transponder, insbesondere ein RFID-Transponder, sein. Die Sendeeinheit kann auch ein Bluetooth-Low-Energy-Signalgeber, also ein Bluetooth-LE-Beacon, sein. Das Bereitstellen von Informationen zu dem an der landwirtschaftlichen Streumaschine montierten Streuscheibentyp kann das Übermitteln der von dem Lesegerät empfangenen Informationen zu dem an der landwirtschaftlichen Streumaschine montierten Streuscheibentyp von dem Lesegerät an die Datenverarbeitungseinrichtung umfassen.

Die der Erfindung zugrundeliegende Aufgabe wird außerdem durch ein Verfahren zum Steuern und/oder Regeln von Streueinstellungen der eingangs genannten Art gelöst, wobei das Ermitteln der geeigneten Streueinstellungen mit einem Verfahren nach einer der vorstehend beschriebenen Ausführungsformen erfolgt. Hinsichtlich der Vorteile und Modifikationen des erfindungsgemäßen Verfahrens zum Steuern und/oder Regeln von Streueinstellungen wird zunächst auf die Vorteile und Modifikationen des erfindungsgemäßen Verfahrens zum Ermitteln von geeigneten Streueinstellungen verwiesen.

In einer bevorzugten Ausführungsform des Verfahrens umfasst das selbsttätige Einstellen der ermittelten geeigneten Streueinstellungen an der landwirtschaftlichen Streumaschine das selbsttätige Einstellen des Aufgabepunkts des Streuguts auf eine Streuscheibe der landwirtschaftlichen Streumaschine zur Anpassung der aktuellen Wurfrichtung des Streuguts an eine zur Erzielung der beabsichtigten Streugutverteilung geeigneten Wurfrichtung des abgeworfenen Streuguts. Alternativ oder zusätzlich umfasst das selbsttätige Einstellen der ermittelten geeigneten Streueinstellungen an der landwirtschaftlichen Streumaschine das selbsttätige Einstellen einer Scheibendrehzahl zur Anpassung der aktuellen Wurfweite des Streuguts an eine zur Erzielung der beabsichtigten Streugutverteilung geeignete Wurfweite des abgeworfenen Streuguts. Das Ermitteln von geeigneten Streueinstellungen umfasst vorzugsweise auch das Ermitteln einer zur Erzielung der beabsichtigten Streugutverteilung geeigneten Wurfweite des abgeworfenen Streuguts.

Ferner wird offenbart, dass eine vorteilhafte landwirtschaftliche Streumaschine eine Datenverarbeitungseinrichtung aufweist, welche dazu eingerichtet ist, die aktuelle Wurfrichtung des abgeworfenen Streuguts auf Grundlage von streugutspezifischen und das Flugverhalten des Streuguts beeinflussenden Streuguteigenschaften und der erfassten aktuellen Wurfweite des abgeworfenen Streuguts zu ermitteln.

Die Wurfweitenmesseinrichtung kann nur eine oder alternativ mehrere Sensoren und/oder nur eine oder alternativ mehrere Kameras umfassen, welche einen durch den Streugutabwurf erzeugten Streufächer überwachen. Die eine oder die mehreren Sensoren der Wurfweitenmesseinrichtung können nach dem Doppler-Prinzip oder über zeitlich versetzte Abstands- und/oder Geschwindigkeitsmessungen die Wurfweite des abgeworfenen Streuguts ermitteln. Die einen oder die mehreren Sensoren der Wurfweitenmesseinrichtung können insbesondere Radarsensoren sein.

Darüber hinaus ist eine landwirtschaftliche Streumaschine bevorzugt, welche dazu eingerichtet ist, das Verfahren zum Ermitteln von geeigneten Streueinstellungen nach einer der vorstehend beschriebenen Ausführungsformen oder das Verfahren zum Steuern und/oder Regeln von Streueinstellungen nach einer der vorstehend beschriebenen Ausführungsformen auszuführen. Hinsichtlich der Vorteile und Modifikationen der landwirtschaftlichen Streumaschine wird auf die Vorteile und Modifikationen des erfindungsgemäßen Verfahrens zum Ermitteln von geeigneten Streueinstellungen und das erfindungsgemäße Verfahren zum Steuern und/oder Regeln von Streueinstellungen verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel einer Streumaschine während des Ermittelns von geeigneten Streueinstellungen; und
- Fig. 2: ein Ausführungsbeispiel des erfindungsgemäßen Verfahrens zum Steuern und/oder Regeln von Streueinstellungen an einer landwirtschaftlichen Streumaschine in einer schematischen Blockdarstellung.

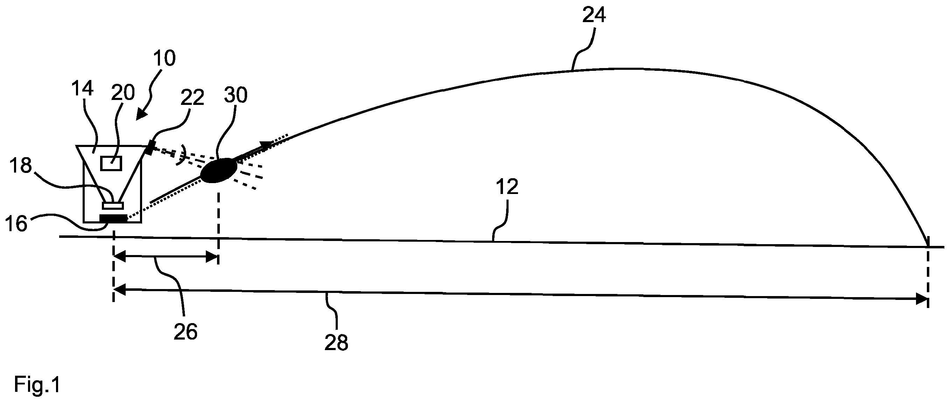

Die Fig. 1 zeigt eine als Zweischeiben-Zentrifugal-Düngerstreuer ausgebildete landwirtschaftliche Streumaschine 10 während der Ausbringung von Streugut 30 auf einer landwirtschaftlichen Nutzfläche 12. Die landwirtschaftliche Streumaschine 10 umfasst einen Vorratsbehälter 14 zur Bevorratung des auszubringenden Streuguts 30. Das auszubringende Streugut 30 ist vorliegend ein körniger Dünger. Während der Streugutausbringung gelangt das in dem Vorratsbehälter 14 befindliche Streugut 30 über Streugut-Einleitsysteme 18 auf zwei nebeneinander angeordnete und rotierend angetriebene Streuscheiben 16. Über die Scheibendrehzahl der Streuscheiben 16 kann die Wurfweite 28 des Streuguts 30 beeinflusst werden. Die Streugut-Einleitsysteme 18 erlauben die Einstellung der Menge des Aufgabepunkts des Streuguts 30 auf die jeweilige Streuscheibe 16. Über die Aufgabepunkteinstellung kann die Aufgabeposition des Streuguts 30 auf die jeweilige Streuscheibe 16 der landwirtschaftlichen Streumaschine 10 eingestellt werden. Über den Aufgabepunkt des Streuguts 30 kann die Wurfrichtung des Streuguts 30 beeinflusst werden. Die Fig. 1 zeigt beispielhaft eine Flugbahn 24 eines Düngerkorns 30.

Die landwirtschaftliche Streumaschine 10 weist eine Wurfweitenmesseinrichtung 22 auf, welche dazu eingerichtet ist, die aktuelle Wurfweite 28 des abgeworfenen Streuguts 30 sensorisch zu erfassen. Hierzu weist die Wurfweitenmesseinrichtung 22 einen Sensor auf, welcher den durch den Streugutabwurf erzeugten Streufächer überwacht. Der Sensor der Wurfweitenmesseinrichtung 22 ermittelt über Geschwindigkeitsmessungen des abgeworfenen Streuguts 30 die Wurfweite 28. Hierzu wird die Geschwindigkeit des abgeworfenen Streuguts 30 in einem Messabstand 26 von etwa 3 m von den Streuscheiben 16 ermittelt.

Die landwirtschaftliche Streumaschine 10 umfasst ferner eine Datenverarbeitungseinrichtung 20, welche dazu eingerichtet ist, die aktuelle Wurfrichtung des abgeworfenen Streuguts 30 auf Grundlage der erfassten aktuellen Wurfweite 28 des abgeworfenen Streuguts 30 zu ermitteln. Beim Ermitteln der aktuellen Wurfrichtung des abgeworfenen Streuguts 30 berücksichtigt die Datenverarbeitungseinrichtung 20 neben der erfassten aktuellen Wurfweite 28 auch streugutspezifische und das Flugverhalten des Streuguts 30 beeinflussende Streuguteigenschaften des Streuguts 30.

Die dargestellte landwirtschaftliche Streumaschine 10 führt zur Ermittlung der aktuellen Wurfrichtung des abgeworfenen Streuguts 30 eine Berechnung durch. Die berechnete aktuelle Wurfrichtung 10 berücksichtigt die landwirtschaftliche Streumaschine 10 beim Ermitteln von geeigneten Streueinstellungen zur Erzielung einer beabsichtigten Streugutverteilung des Streuguts 30 auf der landwirtschaftlichen Nutzfläche 12. Die ermittelten geeigneten Streueinstellungen werden durch die landwirtschaftliche Streumaschine 10 während des Streuvorgangs durch eine Steuer- und/oder Regelungseinrichtung der Streumaschine 10 selbsttätig eingestellt, sodass die beabsichtigte Streugutverteilung ohne einen Steuerungseingriff des Maschinenbedieners umgesetzt wird.

In der dargestellten Ausführungsform ist die Datenverarbeitungseinrichtung 20, welche die Berechnung der aktuellen Wurfrichtung des abgeworfenen Streuguts 30 vornimmt, Bestandteil der landwirtschaftlichen Streumaschine 10. Alternativ kann die Datenverarbeitungseinrichtung 20 auch Bestandteil eines entfernt positionierten Auswertecomputers sein. Der Auswertecomputer kann beispielsweise ein Server sein, welcher von dem Hersteller der landwirtschaftlichen Streumaschine 10 betrieben wird. Die Datenübertragung zwischen der landwirtschaftlichen Streumaschine und der Datenverarbeitungseinrichtung 20 kann in diesem Fall über Funk und/oder unter Verwendung des Internets erfolgen.

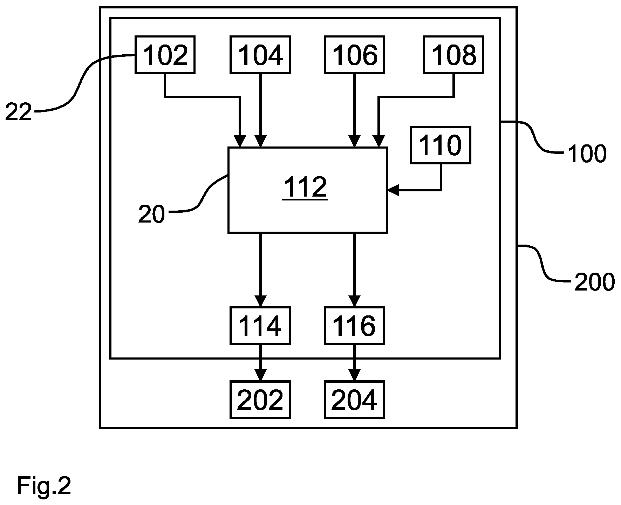

Die Fig. 2 zeigt den Ablauf eines Verfahrens 200 zum Steuern und/oder Regeln von Streueinstellungen an einer landwirtschaftlichen Streumaschine 10. Im Rahmen dieses Verfahrens 200 erfolgt zunächst das Ermitteln von geeigneten Streueinstellungen für die landwirtschaftliche Streumaschine 10 zur Erzielung einer beabsichtigten Streugutverteilung eines Streuguts 30 auf einer landwirtschaftlichen Nutzfläche 12. Das Ermitteln der geeigneten Streueinstellungen erfolgt im Rahmen des Verfahrensschritts 100. Hierzu wird im Verfahrensschritt 102 zunächst die aktuelle Wurfweite 28 des abgeworfenen Streuguts 30 während des Streuvorgangs durch eine Wurfweitenmesseinrichtung 22 der landwirtschaftlichen Streumaschine 10 sensorisch erfasst. Die sensorisch erfasste aktuelle Wurfweite 28 des abgeworfenen Streuguts 30 wird dann einer Datenverarbeitungseinrichtung 20 bereitgestellt. Die Datenverarbeitungseinrichtung 20 kann Bestandteil der landwirtschaftlichen Streumaschine 10 oder Bestandteil eines entfernt positionierten Auswertecomputers sein, mit welchem die landwirtschaftliche Streumaschine 10 Daten austauschen kann.

Im Schritt 104 wird die aktuelle Aufgabepunkteinstellung der landwirtschaftlichen Streumaschine während des Streuvorgangs ermittelt. Die aktuelle Aufgabepunkteinstellung der landwirtschaftlichen Streumaschine 10 kann beispielsweise aus der Steuerung der landwirtschaftlichen Streumaschine 10 ausgelesen werden.

Im Schritt 106 erfolgt das Ermitteln der aktuellen Scheibendrehzahl der Streuscheiben 16 der landwirtschaftlichen Streumaschine 10 während des Streuvorgangs. Die aktuelle Scheibendrehzahl der Streuscheiben 16 der landwirtschaftlichen Streumaschine 10 kann beispielsweise aus der Steuerung der landwirtschaftlichen Streumaschine 10 ausgelesen oder mittels entsprechender Drehzahlsensoren erfasst werden.

Im Schritt 108 erfolgt ein Ermitteln von streugutspezifischen und das Flugverhalten des Streuguts 30 beeinflussenden Streuguteigenschaften. Die streugutspezifischen und das Flugverhalten des Streuguts 30 beeinflussenden Streuguteigenschaften betreffen die Schüttdichte und das Korngrößenspektrum des Streuguts 30. Die streugutspezifischen und das Flugverhalten des Streuguts 30 beeinflussenden Streuguteigenschaften werden von einer Streudatenbank abgerufen. Der Datenabruf erfolgt auf Grundlage von Streugutidentifikationsinformationen, mittels welcher das Streugut 30 identifizierbar ist und welche von einem Benutzer über ein mobiles Endgerät bereitgestellt wurden. Die von dem Benutzer bereitgestellten Streugutidentifikationsinformationen umfassen eine streugutspezifische Streugutbezeichnung, zu welcher auf der Streudatenbank Streuguteigenschaften hinterlegt sind. Die streugutspezifischen und das Flugverhalten des Streuguts 30 beeinflussenden Streuguteigenschaften werden ebenfalls der Datenverarbeitungseinrichtung 20 bereitgestellt.

Im Schritt 110 erfolgt ein Erfassen des an der landwirtschaftlichen Streumaschine 10 montierten Streuscheibentyps. Das Erfassen des an der landwirtschaftlichen Streumaschine 10 montierten Streuscheibentyps erfolgt beispielsweise über ein Auslesen eines grafischen Codes durch einen Codescanner der Streumaschine 10, wobei der grafische Code Informationen zu dem an der landwirtschaftlichen Streumaschine 10 montierten Streuscheibentyp beinhaltet. Die Informationen zu dem an der landwirtschaftlichen Streumaschine 10 montierten Streuscheibentyp werden dann der Datenverarbeitungseinrichtung 20 bereitgestellt. Die Informationen zu dem an der landwirtschaftlichen Streumaschine 10 montierten Streuscheibentyp umfassen Informationen zum Durchmesser und/oder zur Wurfschaufelkonfiguration der Streuscheiben.

Im Schritt 112 erfolgt das Ermitteln der aktuellen Wurfrichtung des abgeworfenen Streuguts 30 während des Streuvorgangs. Die aktuelle Wurfrichtung des abgeworfenen Streuguts 30 erfolgt durch eine Berechnung auf Grundlage der erfassten aktuellen Wurfweite 28 des abgeworfenen Streuguts 30, der aktuellen Aufgabepunkteinstellung der landwirtschaftlichen Streumaschine 10, der aktuellen Scheibendrehzahl der Streuscheiben 16 der landwirtschaftlichen Streumaschine 10, den streugutspezifischen und das Flugverhalten des Streuguts 30 beeinflussenden Streuguteigenschaften und unter Berücksichtigung des montierten Streuscheibentyps. Somit erfolgt das Ermitteln der aktuellen Wurfrichtung des abgeworfenen Streuguts 30 ohne die Verwendung von Messdaten einer Wurfrichtungsmesseinrichtung der Streumaschine 10.

Nachdem die aktuelle Wurfrichtung des abgeworfenen Streuguts 30 berechnet ist, wird im Schritt 114 eine geeignete Aufgabepunkteinstellung für die landwirtschaftliche Streumaschine 10 unter Berücksichtigung der ermittelten aktuellen Wurfrichtung des abgeworfenen Streuguts 30 und einer zur Erzielung der beabsichtigten Streugutverteilung geeigneten Wurfrichtung für das abgeworfene Streugut 30 während des Streuvorgangs ermittelt. Im Schritt 116 wird eine geeignete Scheibendrehzahl für die landwirtschaftliche Streumaschine 10 unter Berücksichtigung der erfassten aktuellen Wurfweite des abgeworfenen Streuguts 30 und einer zur Erzielung der beabsichtigten Streugutverteilung geeigneten Wurfweite für das abgeworfene Streugut 30 ermittelt.

Das Verfahren 200 zum Steuern und/oder Regeln der Streueinstellungen an der landwirtschaftlichen Streumaschine 10 wird durch die Schritte 202, 204 abgeschlossen. Der Schritt 202 betrifft das selbsttätige Einstellen des Aufgabepunkts des Streuguts 30 auf die Streuscheiben 16 der landwirtschaftlichen Streumaschine 10 zur Anpassung der aktuellen Wurfrichtung des Streuguts 30 an die zur Erzielung der beabsichtigten Streugutverteilung geeignete Wurfrichtung des abgeworfenen Streuguts. Der Schritt 204 betrifft das selbsttätige Einstellen einer Scheibendrehzahl zur Anpassung der aktuellen Wurfweite 28 des Streuguts 30 an die zur Erzielung der beabsichtigten Streugutverteilung geeignete Wurfweite des abgeworfenen Streuguts 30.

### Bezugszeichenliste

- 10: Streumaschine
- 12: Nutzfläche
- 14: Vorratsbehälter
- 16: Streuscheiben
- 18: Streugut-Einleitsysteme
- 20: Datenverarbeitungseinrichtung
- 22: Wurfweitenmesseinrichtung
- 24: Flugbahn
- 26: Messabstand
- 28: Wurfweite
- 30: Streugut

- 100-116: Verfahrensschritte

- 200-204: Verfahrensschritte

## Patentansprüche

1. Verfahren zum Ermitteln von geeigneten Streueinstellungen für eine landwirtschaftliche Streumaschine (10) zur Erzielung einer beabsichtigten Streugutverteilung eines Streuguts (30) auf einer landwirtschaftlichen Nutzfläche (12), mit den Schritten:
- sensorisches Erfassen der aktuellen Wurfweite (28) des abgeworfenen Streuguts (30) während des Streuvorgangs durch eine Wurfweitenmesseinrichtung (22) der landwirtschaftlichen Streumaschine (10);
- Ermitteln der aktuellen Wurfrichtung des abgeworfenen Streuguts (30) während eines Streuvorgangs;
wobei das Ermitteln der aktuellen Wurfrichtung des abgeworfenen Streuguts (30) durch eine Datenverarbeitungseinrichtung (20) auf Grundlage von streugutspezifischen und das Flugverhalten des Streuguts (30) beeinflussenden Streuguteigenschaften des Streuguts (30) und der erfassten aktuellen Wurfweite (28) des abgeworfenen Streuguts (30) erfolgt; und
- Ermitteln einer geeigneten Aufgabepunkteinstellung für die landwirtschaftliche Streumaschine (10) unter Berücksichtigung der ermittelten aktuellen Wurfrichtung des abgeworfenen Streuguts (30) und einer zur Erzielung der beabsichtigten Streugutverteilung geeigneten Wurfrichtung für das abgeworfene Streugut (30) während des Streuvorgangs.

2. Verfahren nach Anspruch 1,
**gekennzeichnet durch** den Schritt:
- Ermitteln der aktuellen Aufgabepunkteinstellung der landwirtschaftlichen Streumaschine (10) während des Streuvorgangs;
wobei das Ermitteln der aktuellen Wurfrichtung des abgeworfenen Streuguts (30) durch die Datenverarbeitungseinrichtung (20) auch auf Grundlage der ermittelten aktuellen Aufgabepunkteinstellung der landwirtschaftlichen Streumaschine (10) erfolgt.

3. Verfahren nach Anspruch 1 oder 2,
**gekennzeichnet durch** den Schritt:
- Ermitteln der aktuellen Scheibendrehzahl zumindest einer Streuscheibe (16) der landwirtschaftlichen Streumaschine (10) während des Streuvorgangs;
wobei das Ermitteln der aktuellen Wurfrichtung des abgeworfenen Streuguts (30) durch die Datenverarbeitungseinrichtung (20) auch auf Grundlage der ermittelten aktuellen Scheibendrehzahl zumindest einer Streuscheibe (16) der landwirtschaftlichen Streumaschine (10) erfolgt.

4. Verfahren nach einem der vorstehenden Ansprüche,
**dadurch gekennzeichnet, dass** die streugutspezifischen und das Flugverhalten des Streuguts (30) beeinflussenden Streuguteigenschaften die Schüttdichte und/oder Korngrößen- und/oder Kornformeigenschaften des Streuguts (30) betreffen.

5. Verfahren nach einem der vorstehenden Ansprüche,
**gekennzeichnet durch** zumindest einen der folgenden Schritte:
- Erfassen von Streugutidentifikationsinformationen, mittels welcher das Streugut (30) identifizierbar ist;
- Abrufen der streugutspezifischen und das Flugverhalten des Streuguts (30) beeinflussenden Streuguteigenschaften des Streuguts (30) von einer Streudatenbank, insbesondere auf Grundlage der erfassten Streugutidentifikationsinformationen.

6. Verfahren nach einem der vorstehenden Ansprüche,
**gekennzeichnet durch** zumindest einen der folgenden Schritte:
- Erzeugen zumindest einer Bildaufnahme des Streuguts (30);
- Ermitteln der streugutspezifischen und das Flugverhalten des Streuguts (30) beeinflussenden Streuguteigenschaften des Streuguts (30) durch Auswertung der erzeugten Bildaufnahme des Streuguts (30).

7. Verfahren nach einem der vorstehenden Ansprüche,
**gekennzeichnet durch** zumindest einen der folgenden Schritte:
- Bereitstellen einer Eingabemöglichkeit für die streugutspezifischen und das Flugverhalten des Streuguts (30) beeinflussenden Streuguteigenschaften des Streuguts (30) für einen Benutzer;
- Auslesen eines graphischen Codes, welcher die streugutspezifischen und das Flugverhalten des Streuguts (30) beeinflussenden Streuguteigenschaften des Streuguts (30) beinhaltet;
- Empfangen der streugutspezifischen und das Flugverhalten des Streuguts (30) beeinflussenden Streuguteigenschaften des Streuguts (30) von einer Sendeeinheit durch ein Lesegerät.

8. Verfahren nach einem der vorstehenden Ansprüche,
**dadurch gekennzeichnet, dass** das Ermitteln der aktuellen Wurfrichtung des abgeworfenen Streuguts (30) ohne die Verwendung von Messdaten einer Wurfrichtungsmesseinrichtung der Streumaschine (10) erfolgt.

9. Verfahren nach einem der vorstehenden Ansprüche,
**gekennzeichnet durch** zumindest einen der folgenden Schritte:
- Erfassen des an der landwirtschaftlichen Streumaschine (10) montieren Streuscheibentyps;
wobei das Ermitteln der aktuellen Wurfrichtung des abgeworfenen Streuguts (30) und/oder das Ermitteln der geeigneten Aufgabepunkteinstellung für die landwirtschaftliche Streumaschine (10) auch unter Berücksichtigung des an der landwirtschaftlichen Streumaschine (10) montieren Streuscheibentyps erfolgt.

10. Verfahren nach Anspruch 9,
**dadurch gekennzeichnet, dass** das Erfassen des an der landwirtschaftlichen Streumaschine (10) montieren Streuscheibentyps zumindest einen der folgenden Schritte umfasst:
- Bereitstellen einer Eingabemöglichkeit für die Bereitstellung von Informationen zu dem an der landwirtschaftlichen Streumaschine (10) montieren Streuscheibentyp;
- Auslesen eines graphischen Codes, welcher Informationen zu dem an der landwirtschaftlichen Streumaschine (10) montieren Streuscheibentyp beinhaltet;
- Empfangen von Informationen zu dem an der landwirtschaftlichen Streumaschine (10) montierten Streuscheibentyp von einer Sendeeinheit durch ein Lesegerät.

11. Verfahren zum Steuern und/oder Regeln von Streueinstellungen an einer landwirtschaftlichen Streumaschine (10), mit den Schritten:
- Ermitteln von geeigneten Streueinstellungen an der landwirtschaftlichen Streumaschine (10) zur Erzielung einer beabsichtigten Streugutverteilung eines Streuguts (30) auf einer landwirtschaftlichen Nutzfläche (12); und
- selbsttätiges Einstellen der ermittelten geeigneten Streueinstellungen an der landwirtschaftlichen Streumaschine (10) während eines Streuvorgangs durch eine Steuer- und/oder Regelungseinrichtung der Streumaschine (10);
**dadurch gekennzeichnet, dass** das Ermitteln der geeigneten Streueinstellungen mit einem Verfahren nach einem der Ansprüche 1 bis 8 erfolgt.

12. Verfahren nach Anspruch 11,
**dadurch gekennzeichnet, dass** das selbsttätige Einstellen der ermittelten geeigneten Streueinstellungen an der landwirtschaftlichen Streumaschine (10) zumindest einen der folgenden Schritte umfasst:
- selbsttätiges Einstellen des Aufgabepunkts des Streuguts (30) auf eine Streuscheibe (16) der landwirtschaftlichen Streumaschine (10) zur Anpassung der aktuellen Wurfrichtung des Streuguts (30) an eine zur Erzielung der beabsichtigten Streugutverteilung geeignete Wurfrichtung des abgeworfenen Streuguts (30);
- selbsttätiges Einstellen einer Scheibendrehzahl zur Anpassung der aktuellen Wurfweite (28) des Streuguts (30) an eine zur Erzielung der beabsichtigten Streugutverteilung geeignete Wurfweite des abgeworfenen Streuguts (30).

## Claims

1. Method for determining suitable spreading settings for an agricultural spreader (10) in order to achieve an intended spreading material distribution of a spreading material (30) over agricultural land (12), comprising the steps of:
- detecting, by sensor, the current ejection distance (28) of the ejected spreading material (30) during the spreading process by means of an ejection distance measuring device (22) of the agricultural spreader (10);
- determining the current ejection direction of the ejected spreading material (30) during a spreading process;
wherein the current ejection direction of the ejected spreading material (30) is determined by a data processing device (20) on the basis of spreading material-specific spreading material properties of the spreading material (30), which influence the flight behavior of the spreading material (30), and the detected current ejection distance (28) of the ejected spreading material (30); and
- determining a suitable point-of-application setting for the agricultural spreader (10) taking into account the determined current ejection direction of the ejected spreading material (30) and an ejection direction for the ejected spreading material (30) which is suitable for achieving the intended spreading material distribution during the spreading process.

2. Method according to claim 1,
**characterized by** the step of:
- determining the current point-of-application setting of the agricultural spreader (10) during the spreading process;
wherein the current ejection direction of the ejected spreading material (30) is determined by the data processing device (20) also on the basis of the determined current point-of-application setting of the agricultural spreader (10).

3. Method according to claim 1 or 2,
**characterized by** the step of:
- determining the current disk rotation speed of at least one spreading disk (16) of the agricultural spreader (10) during the spreading process;
wherein the current ejection direction of the ejected spreading material (30) is determined by the data processing device (20) also on the basis of the determined current disk rotation speed of at least one spreading disk (16) of the agricultural spreader (10).

4. Method according to any of the preceding claims,
**characterized in that** the spreading material-specific spreading material properties which influence the flight behavior of the spreading material (30) relate to the bulk density and/or grain size and/or grain shape properties of the spreading material (30).

5. Method according to any of the preceding claims,
**characterized by** at least one of the following steps:
- capturing spreading material identification information, by means of which the spreading material (30) can be identified;
- retrieving the spreading material-specific spreading material properties of the spreading material (30) which influence the flight behavior of the spreading material (30) from a spreading database, in particular on the basis of the captured spreading material identification information.

6. Method according to any of the preceding claims,
**characterized by** at least one of the following steps:
- generating at least one image capture of the spreading material (30);
- determining the spreading material-specific spreading material properties of the spreading material (30) which influence the flight behavior of the spreading material (30) by evaluating the generated image capture of the spreading material (30).

7. Method according to any of the preceding claims,
**characterized by** at least one of the following steps:
- providing a user with an input option for the spreading material-specific spreading material properties of the spreading material (30) which influence the flight behavior of the spreading material (30);
- reading out a graphic code which contains the spreading material-specific spreading material properties of the spreading material (30) which influence the flight behavior of the spreading material (30);
- receiving the spreading material-specific spreading material properties of the spreading material (30) which influence the flight behavior of the spreading material (30) from a transmitting unit by means of a reading device.

8. Method according to any of the preceding claims,
**characterized in that** the current ejection direction of the ejected spreading material (30) is determined without the use of measurement data from an ejection direction measuring device of the spreader (10).

9. Method according to any of the preceding claims,
**characterized by** at least one of the following steps:
- detecting the type of spreading disk mounted on the agricultural spreader (10);
wherein the current ejection direction of the ejected spreading material (30) and/or the suitable point-of-application setting for the agricultural spreader (10) is determined also by taking the type of spreading disk mounted on the agricultural spreader (10) into account.

10. Method according to claim 9,
**characterized in that** detecting the type of spreading disk mounted on the agricultural spreader (10) comprises at least one of the following steps:
- providing an input option for the provision of information regarding the type of spreading disk mounted on the agricultural spreader (10);
- reading out a graphic code which contains information regarding the type of spreading disk mounted on the agricultural spreader (10);
- receiving information regarding the type of spreading disk mounted on the agricultural spreader (10) from a transmitting unit by means of a reading device.

11. Method for open-loop and/or closed-loop control of spreading settings of an agricultural spreader (10), comprising the steps of:
- determining suitable spreading settings of the agricultural spreader (10) in order to achieve an intended spreading material distribution of a spreading material (30) over agricultural land (12); and
- automatically setting the determined suitable spreading settings of the agricultural spreader (10) during a spreading process by means of an open-loop and/or closed-loop control device of the spreader (10);
**characterized in that** a method according to any of claims 1 to 8 is used to determine the suitable spreading settings.

12. Method according to claim 11,
**characterized in that** automatically setting the determined suitable spreading settings of the agricultural spreader (10) comprises at least one of the following steps:
- automatically setting the point-of-application of the spreading material (30) on a spreading disk (16) of the agricultural spreader (10) in order to adapt the current ejection direction of the spreading material (30) to an ejection direction of the ejected spreading material (30) which is suitable for achieving the intended spreading material distribution;
- automatically setting a disk speed in order to adapt the current ejection distance (28) of the spreading material (30) to an ejection distance of the ejected spreading material (30) which is suitable for achieving the intended spreading material distribution.

## Revendications

1. Procédé permettant de déterminer des réglages d'épandage appropriés pour une machine d'épandage agricole (10) afin d'obtenir une répartition de produit à épandre prévue d'un produit à épandre (30) sur une surface utile agricole (12), comportant les étapes consistant à :
- détecter de manière sensorielle, grâce à un dispositif de mesure de distance de projection (22) de la machine d'épandage agricole (10), la distance de projection (28) actuelle du produit à épandre (30) distribué pendant le processus d'épandage ;
- déterminer la direction de projection actuelle du produit à épandre (30) distribué pendant un processus d'épandage ;
dans lequel la détermination de la direction de projection actuelle du produit à épandre (30) distribué est effectuée par un dispositif de traitement de données (20) sur la base de propriétés de produit à épandre du produit à épandre (30) spécifiques au produit à épandre et influençant le comportement en vol du produit à épandre (30) et de la distance de projection (28) actuelle détectée du produit à épandre (30) distribué ; et
- déterminer un réglage de point d'alimentation approprié pour la machine d'épandage agricole (10) en tenant compte de la direction de projection actuelle déterminée du produit à épandre (30) distribué et d'une direction de projection appropriée pour le produit à épandre (30) distribué pendant le processus d'épandage afin d'obtenir la répartition de produit à épandre prévue.

2. Procédé selon la revendication 1,
**caractérisé par** l'étape consistant à :
- déterminer le réglage de point d'alimentation actuel de la machine d'épandage agricole (10) pendant le processus d'épandage ;
dans lequel la détermination de la direction de projection actuelle du produit à épandre (30) distribué est effectuée par le dispositif de traitement de données (20) également sur la base du réglage de point d'alimentation actuel déterminé de la machine d'épandage agricole (10).

3. Procédé selon la revendication 1 ou 2,
**caractérisé par** l'étape consistant à :
- déterminer la vitesse de rotation de disque actuelle d'au moins un disque d'épandage (16) de la machine d'épandage agricole (10) pendant le processus d'épandage ;
dans lequel la détermination de la direction de projection actuelle du produit à épandre (30) distribué est effectuée par le dispositif de traitement de données (20) également sur la base de la vitesse de rotation de disque actuelle déterminée d'au moins un disque d'épandage (16) de la machine d'épandage agricole (10).

4. Procédé selon l'une des revendications précédentes,
**caractérisé en ce que** les propriétés de produit à épandre, spécifiques au produit à épandre et influençant le comportement en vol du produit à épandre (30), concernent la densité en vrac et/ou les propriétés de granulométrie et/ou de forme des grains du produit à épandre (30).

5. Procédé selon l'une des revendications précédentes,
**caractérisé par** au moins l'une des étapes suivantes :
- détection d'informations d'identification de produit à épandre, informations par le biais desquelles le produit à épandre (30) peut être identifié ;
- extraction des propriétés de produit à épandre du produit à épandre (30), spécifiques au produit à épandre et influençant le comportement en vol du produit à épandre (30), à partir d'une base de données d'épandage, en particulier sur la base des informations d'identification de produit à épandre détectées.

6. Procédé selon l'une des revendications précédentes,
**caractérisé par** au moins l'une des étapes suivantes :
- génération d'au moins une capture d'image du produit à épandre (30) ;
- détermination des propriétés de produit à épandre du produit à épandre (30) spécifiques au produit à épandre et influençant le comportement en vol du produit à épandre (30) par évaluation de la capture d'image générée du produit à épandre (30).

7. Procédé selon l'une des revendications précédentes,
**caractérisé par** au moins l'une des étapes suivantes :
- fourniture d'une possibilité de saisie pour les propriétés de produit à épandre du produit à épandre (30) spécifiques au produit à épandre et influençant le comportement en vol du produit à épandre (30) pour un utilisateur ;
- lecture d'un code graphique qui contient les propriétés de produit à épandre du produit à épandre (30) spécifiques au produit à épandre et influençant le comportement en vol du produit à épandre (30) ;
- réception, par un appareil de lecture en provenance d'une unité d'émission, des propriétés de produit à épandre du produit à épandre (30), spécifiques au produit à épandre et influençant le comportement en vol du produit à épandre (30).

8. Procédé selon l'une des revendications précédentes,
**caractérisé en ce que** la détermination de la direction de projection actuelle du produit à épandre (30) distribué s'effectue sans l'utilisation de données de mesure d'un dispositif de mesure de direction de projection de la machine d'épandage (10).

9. Procédé selon l'une des revendications précédentes,
**caractérisé par** au moins l'une des étapes suivantes :
- détection du type de disque d'épandage monté sur la machine d'épandage agricole (10) ;
dans lequel la détermination de la direction de projection actuelle du produit à épandre (30) distribué et/ou la détermination du réglage de point d'alimentation approprié pour la machine d'épandage agricole (10) s'effectuent également en tenant compte du type de disque d'épandage monté sur la machine d'épandage agricole (10).

10. Procédé selon la revendication 9,
**caractérisé en ce que** la détection du type de disque d'épandage monté sur la machine d'épandage agricole (10) comprend au moins l'une des étapes suivantes :
- fourniture d'une possibilité de saisie pour la fourniture d'informations sur le type de disque d'épandage monté sur la machine d'épandage agricole (10) ;
- lecture d'un code graphique contenant des informations sur le type de disque d'épandage monté sur la machine d'épandage agricole (10) ;
- réception par un appareil de lecture, en provenance d'une unité d'émission, d'informations sur le type de disque d'épandage monté sur la machine d'épandage agricole (10).

11. Procédé permettant de commander et/ou de réguler des réglages d'épandage sur une machine d'épandage agricole (10), comportant les étapes consistant à :
- déterminer des réglages d'épandage appropriés sur la machine d'épandage agricole (10) afin d'obtenir une distribution de produit à épandre prévue d'un produit à épandre (30) sur une surface utile agricole (12) ; et
- régler automatiquement les réglages d'épandage appropriés déterminés sur la machine d'épandage agricole (10) pendant un processus d'épandage par un dispositif de commande et/ou de régulation de la machine d'épandage (10) ;
**caractérisé en ce que** la détermination des réglages d'épandage appropriés est effectuée par un procédé selon l'une des revendications 1 à 8.

12. Procédé selon la revendication 11,
**caractérisé en ce que** le réglage automatique des réglages d'épandage appropriés déterminés sur la machine d'épandage agricole (10) comprend au moins l'une des étapes suivantes :
- réglage automatique du point d'alimentation du produit à épandre (30) sur un disque d'épandage (16) de la machine d'épandage agricole (10) pour l'adaptation de la direction de projection actuelle du produit à épandre (30) à une direction de projection appropriée du produit à épandre (30) distribué pour obtenir la répartition de produit à épandre prévue ;
- réglage automatique d'une vitesse de rotation de disque pour l'adaptation de la distance de projection (28) actuelle du produit à épandre (30) à une distance de projection appropriée du produit à épandre (30) distribué pour obtenir la répartition de produit à épandre prévue.
